(19) Europäisches Patentamt / European Patent Office / Office européen des brevets

(11) **EP 2 150 922 B1**

(12) **EUROPEAN PATENT SPECIFICATION**

(45) Date of publication and mention
of the grant of the patent:
**12.11.2014 Bulletin 2014/46**

(51) Int Cl.:
**G06K 19/06** (2006.01)  **G06K 7/14** (2006.01)

(21) Application number: **08733438.9**

(22) Date of filing: **05.05.2008**

(86) International application number:
**PCT/AU2008/000613**

(87) International publication number:
**WO 2008/134804 (13.11.2008 Gazette 2008/46)**

(54) **LARGE NUMBER ID TAGGING SYSTEM**

ID-TAGGING-SYSTEM FÜR GROSSE ZAHLEN

SYSTÈME D'ÉTIQUETAGE D'IDENTIFICATION PAR UN GRAND NOMBRE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **03.05.2007  AU 2007902334 P**

(43) Date of publication of application:
**10.02.2010 Bulletin 2010/06**

(73) Proprietors:
• **Loughrey, Kevin**
**Gymea Bay, New South Wales 2227 (AU)**
• **Evans, Michael**
**Stroud Gloucestershire GL6 9JS (GB)**
• **Curtis, Ivan**
**Vale Park, South Australia 5081 (AU)**

(72) Inventors:
• **Loughrey, Kevin**
**Gymea Bay, New South Wales 2227 (AU)**
• **Evans, Michael**
**Stroud Gloucestershire GL6 9JS (GB)**
• **Curtis, Ivan**
**Vale Park, South Australia 5081 (AU)**

(74) Representative: **Williams, Ceili et al**
**Stevens Hewlett & Perkins**
**1, Pemberton Row**
**London**
**EC4A 3BG (GB)**

(56) References cited:
**EP-A1- 0 672 994      EP-A2- 1 179 805
US-A- 4 745 269        US-A- 5 541 396
US-A- 5 825 015        US-B2- 6 830 198**

## Description

**Field of the Invention**

The invention relates to identification tagging of objects.

**Background of the Invention**

There is a commercial and organisational need to identify objects/articles for the purposes of facilitating transactions such as point of sale and administrative functions such as stock-takes. There is also a need for an ID system to facilitate the tracking of an item through a process or system. In the past this need has been met by:

> plain language labels or plates that are attached to the item or engraving on the item;
> barcodes, such as described in EP 1 179 805; and
> Radio Frequency Identification (RFID) Tags.

Marking of an object can take two forms:

> identification of the type of object; and
> identifying an object explicitly within a group of the same type by use of a serial number.

Sometimes both of these forms of identification are used, i.e., the tag provides the item's nomenclature and also provides a serial number that is unique amongst that item's population, either globally or within the company or organisation within which that item is held. With computerised databases and the use of unique serial numbers it is possible to identify the type of object and its provenance simply by its serial number.

A system that relies only on a serial number requires that the serial number never be repeated. In the past this has been difficult to achieve. Barcodes that allow for very large numbers are usually of some considerable length and this makes them unsuitable for attachment to small articles. If an RFID tag is employed, it is possible to have an identification number of 64 bits ($16 \times 10^{18}$) or greater. Using a system that employs a very large number will be satisfactory provided all users of this technology obtain their number from the same registry, thereby ensuring there is never any duplication. For this to be usable world-wide there has to be a world-wide registry. Because both barcode and RFID technology is now in the public domain, it would be difficult, if not impossible at this stage, to impose such as regime on an existing tagging system. However, with a new type of technology, "owned" by one entity, this system of unique numbering of articles would be possible provided that technology broadly satisfied the needs of the majority of users. This system can entail:

> the number to be very, very large so as to be "inexhaustible";
> the tag to be very low cost;
> the tag to be extremely durable;
> the tag be able to be read with confidence in dirty conditions, attached to all types of articles and in all climates;
> the reader and tag technology be simple and easy to obtain from numerous sources (in other words a very liberal, inexpensive licensing policy);
> software that interfaces the reader to a PC, and prints the ID tag's pattern, be freely available; and
> the tag be capable of being made very small (so that it will fit on curved surfaces and objects with a wide range of size) but having, within its standard, the ability for the tag to be made to any size users' require for the particular application.

Passive RFID do not require a battery as they are powered by an oscillating magnetic field produced by the reader. As such passive RFID tags satisfy most of the above except for:

> **Cost:** Typically the lowest cost RFID tag is one that is passive and will cost somewhere between US$0.10 and US$0.15 to make once the chip is attached to a low cost foil antenna or lead-frame, whereby the cost to tag a billion articles would be around one hundred to one hundred and fifty million dollars;
> **Readability in All Conditions:** RFID tags are sometimes affected by the object to which they are attached - for example if the object is metal, it will interfere with the powering field being radiated by the reader and thereby diminish the range at which the tag can be read, or climatic conditions (particularly heat and cold) for example if the temperature exceeds 50°C or is less than -20°C most low cost RFID tags will not function reliably, or depending on the frequency of excitation, RFID tags typically do not function to their full ability underwater; and
> **Size:** RFID tags are generally larger than 10mm by 10mm in order to have any

suitable range, which can limit the types of articles to which they can be attached. The advent of the Internet has allowed companies to have global connectivity. The advent of the personal computer has provided businesses with super-computers on the desk with memory capacities that allow the PC to comfortably hold all of the company's database plus all documentation related to the task the user has to perform in their day to day activities. The consequence of this is that tags usually do not have to hold a history of the events pertaining to the item. Instead, all that is needed is a unique number, enabling all of the item's details to be retrieved in "real-time" from a database anywhere in the world. When RFID tags were first conceived, even before they became a reality, the general thinking was focused on the advantages of having a "traveling database". However, as explained, the need for this type of mobile storage is now diminished because of the Internet and the ability to have almost real-time distributed databases. Given these facts, in order of priority, the user requirements for a successful tagging system have changed. They are now assessed as being:

> ➢ cost;
> ➢ ability to be read in most situations;
> ➢ a unique number that won't be duplicated due to a lack of capacity; and
> ➢ ability to be attached to the widest possible range of articles, flat and curved surfaces, because of its small size.

**Object of the Invention**

It is an object of the present invention to overcome or ameliorate at least one of the disadvantages of the prior art, or to provide a useful alternative.

**Summary of the Invention**

According to a first aspect of the invention there is provided a tag reading apparatus, as defined in claim 1, for reading a tag adapted to store a very large binary number, the tag comprising a pattern of dots to represent a code element the apparatus comprising:

an image capture element for receiving a first image having a first tag in view; and
a processor element adapted to apply one or more digital processing functions to the image; wherein the processor element is adapted to orientate and scale the first image thereby to provide a first data element for storing an orientated scaled image having a two-dimensional representation;
the processor element is adapted to calculate a second data matrix element for storing an intermediate image of an isolated tag, and to extract therefrom a plurality of array segments.

The invention is characterised in that the code element represented on the tag is created by applying an encryption algorithm to the large binary number; each one of the plurality of array segments extracted from the intermediate image is indicative of an identical arrangements of dots and is indicative of the stored binary number; and the processor element is adapted to calculate, from the plurality of array segments, a decoded code element and to decrypt the decoded code element to extract the stored binary number.

According to a second aspect of the invention there is provided a method of reading a tag ,as defined in claim 10, adapted to store a very large binary number, the tag comprising a pattern of dots to represent a code element created by applying an encryption algorithm to the large binary number, the method comprising the steps of:

receiving a first image having a first tag in view;
orientating and scaling the image such that to provide a first data element storing an orientated scaled image having a two dimensional representation that is substantially aligned to the tag; and
calculating a second data element for storing an intermediate image of an isolated tag;
extracting, from the second data element, a plurality of array segments, each one of the plurality of array segments being indicative of an identical arrangement of dots and being indicative of the stored binary number;
calculating, from the plurality of array segments, a decoded code element indicative of the binary number, wherein the decoded code element is provided in the form of a first confirmed bit vector indicative of the stored binary number, and decoding of the decoded code element is confirmed by including calculation of a parity check; and
decrypting the decoded code element thereby calculating and certifying the stored binary number, wherein decrypting the decoded code element includes calculating a check function to certify the stored binary number.

According to an embodiment of the invention there is provided a tag system that uses dots to store a very large binary number and combined with the Digital Image Processing functions to allow for a reliable recovery of the tag code regardless of the orientation of the tag to the reader and without the need for the tag pattern to incorporate any form of fiducial mark.

Such a method of creating a pattern of dots to represent a number created by an encryption algorithm and later decrypted by the tag reader, which may be combined with the use of a check code, is advantageous in two ways. First, it allows the system to achieve an extremely small probability of the reader delivering an incorrect result and, secondly, prevents people from creating tags that are not in accordance with a central registry from which tag numbers are allocated in accordance with some predefined schema.

According to a further embodiment of the invention there is provided a method of processing the images comprised of dots on the tags that provides a high probability of a tag being readable despite the tag having suffered considerable damage in the form of scratches or wear.

According to a further embodiment of the invention there is provided a tag system that uses dots to store a very large binary number such that the number is, for practical purposes, inexhaustible.

According to a further embodiment of the invention there is provided a tag system that stores a very large binary number by utilising dots arranged in a series of identical arrays.

According to a further embodiment of the invention there is provided a tag system that uses dots to store a very large binary number as described in 'a' and 'b' above and is capable of being made extremely small, i.e., less than 4mm by 2mm.

The tag, as described above, is preferably created on a film or sheet by printing an array of dots on the surface utilising an ink jet printer, a laser or some etching device.

The tag, as described above, is preferably coated with abrasion resistant clear polymer, glass or a very thin layer of diamond in order to be extremely scratch resistant.

The tag, as described above, preferably consists of three layers:

(a) a scratch resistant layer,
(b) a layer upon which the array of dots is created, and
(c) an adhesive layer consisting of an extremely strong glue.

The tag, as described above, wherein the glue preferably contains a material that strongly fluoresces under UV or other forms of electromagnetic radiation.

**Brief Description of the Drawing Figures**

A preferred embodiment of the invention will now be described, by way of example only, with reference to the accompanying drawings in which:

FIG. 1A     is a schematic representation of a tag;
FIG. 1B     is a schematic representation of a tag;
FIG. 1C     is a schematic representation of a tag;
FIG. 1D     is a schematic representation of a tag;
FIG. 1E     is a schematic representation of a tag;
FIG. 2      is a schematic representation of a CCD reader;
FIG. 3      is a schematic representation of a reader aiming and focusing system;
FIG. 4      is a block diagram of an orientation function;
FIG. 5      is a schematic representation of auto-correlation;
FIG. 6      is a schematic representation of horizontal and vertical vectors;
FIG. 7      is a flow chart of an extraction process;
FIG. 8A     is a graphic depiction of ideal reception curves;
FIG. 8B     is a graphic depiction of non-ideal reception curves;
FIG. 9      is a schematic representation of a decoding function;
FIG. 10     is a schematic representation of a de-encryption; and
FIG. 11     is a schematic representation of a tag in cross-section.

**Best Mode and Other Embodiments of the Invention**

An embodiment provides a number of possible solutions for a tag that will satisfy one or more of the above requirements. An exception may include that the tag may not be able to be read if it cannot be seen by the human eye.

*Solution #1 - Single Array with Error Checking*

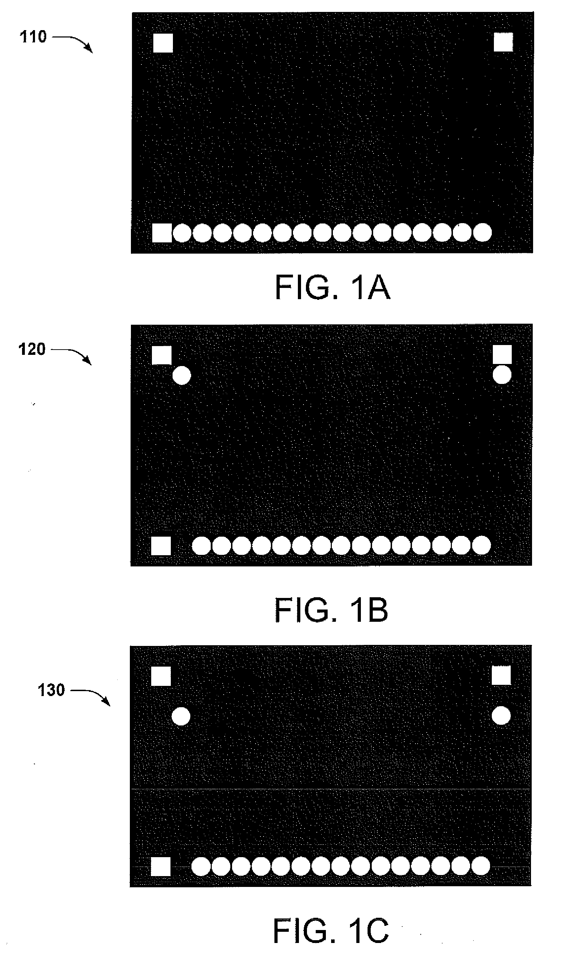

The FIGs 1A to IE depict tags belonging to one of a number of solutions to this problem and having the values 0000 0000, 1000 0000, 2000 0000, 3000 0000, FFFF FFFF respectively. In detail:

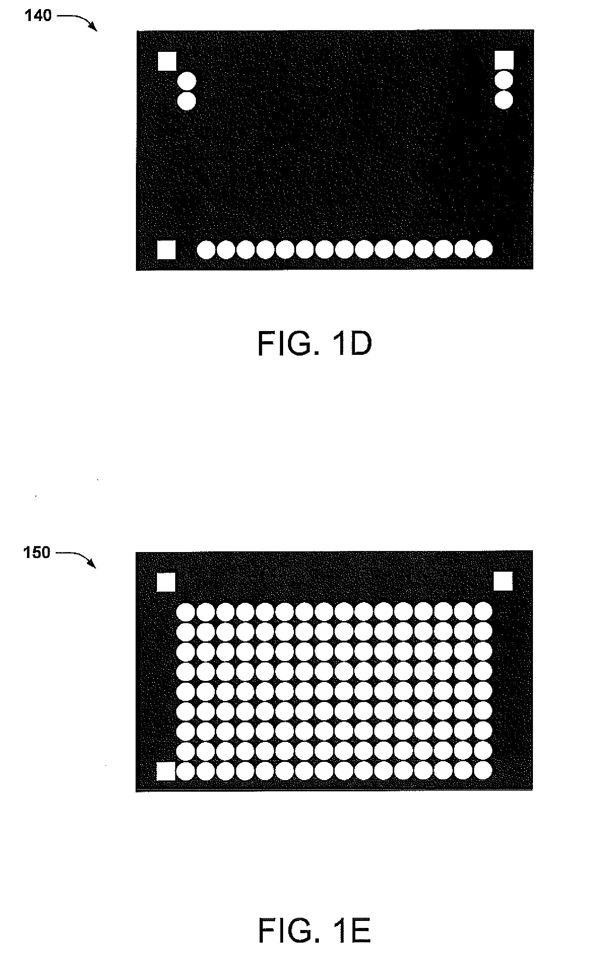

➢ FIG. 1Ashows a tag 110 that has a value of 0000 0000 0000 0000. The bottom line represents an odd parity whereas the right hand column is even parity (hence for zero dots, there are zero dots in the right hand column.
➢ FIG. 1B shows a tag 120 that has a value of 1000 0000 0000 0000 (1 decimal). The bottom row is missing a dot because this row represents odd parity. Likewise there is a dot in the right hand side column because it is even parity.
➢ FIG. 1C shows a tag 130 that has a value of 0100 0000 0000 0000. (2 decimal).
➢ FIG. 1D shows a tag 140 that has the value of 1100 0000 0000 0000.
➢ FIG. 1E shows a tag 150 that has the value FFFF FFFF FFFF FFFF. Note the bottom row is odd parity and the right hand column is even parity.

*Solution #2 - Multiple Arrays with or without Encryption*

In overview, Solution 2 is a development on Solution 1 but has finer dots. These dots are grouped into arrays 20 x 10 dots with 100 arrays on a tag. The dots depict an encrypted value. The array is rectangular, approximately 3 mm across x 2 mm down fitting onto a physical space of 3.5mm x 2.5mm.

Further details for this solution include:

➢ An image is formed on the tag using a process similar to ink-jet printing or photo-plotting;
➢ The image is a rectangular array of dots;
➢ The tag image is notionally divided into a grid of 60 across by 30 down;
➢ For the purposes of discussion each point in this grid is called a "Dot Position";
➢ In the tag image, each Dot Position is either marked with a dot or is blank;
➢ The grid is partitioned into rectangular zones, each zone being a 20 x 10 dot Array;
➢ Therefore, in a tag consisting of a grid of 60 x 30, there are 9 zones arranged as a 3 x 3 reticle; and
➢ The image in each zone (Zone Image) is the same i.e. there are 9 instances of the same arrangement of dots depicted in the zone.

The tag may or may not have "fiducial" marks so that the tag can be orientated in the reader's memory regardless of how the tag is presented at the time of being read. In the technology developed, it has been possible to have a tag that does not necessarily have fiducial marks. Fiducial marks may be helpful in some circumstances in determining tag orientation, reducing the chances of error (which are already very small) and speeding up the recognition/deciphering of the tag's image by the processing electronics.

A number of areas of innovation are identified as follows:

> The Reader. This covers the general arrangement and the optics and aiming system used to capture a crisp image of the entire tag.
> The Tag. This covers the arrangement of the pattern on the tag and the manner in which the tag may be manufactured.
> The Processing Electronics. This covers the algorithm used and the method by which the electronics process the image.

*The Reader*

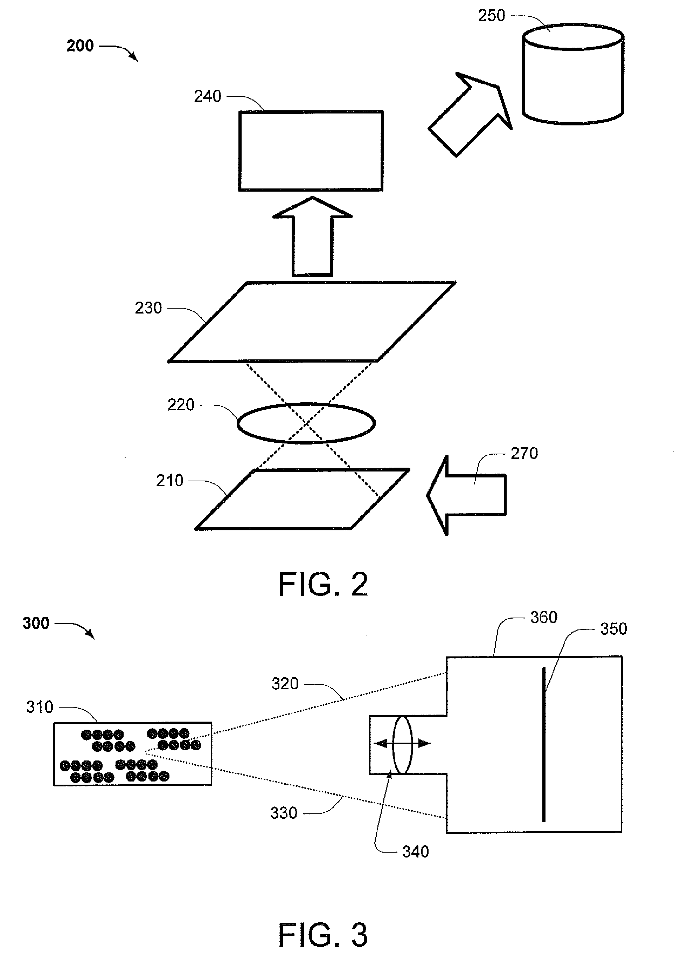

FIG. 2 depicts the general arrangement of the reader 200 utilising an image sensor such as a CCD chip. The tag 210 is illuminated by the reader. The image is magnified by a, say, 10x lens 220 onto a CCD receptor (commonly found in a video camera). The digital result of this image is fed to a processor 230 coupled with sufficient dynamic memory 240, or other storage device 250, where it is processed in order to:

> orientate the image of the tag so that the top left hand corner is identified;
> scale the tag so that the distance between the dots can be properly judged; and
> calculate the value of the dots.

Fiducial marks may be helpful in determining the orientation of the tag but it has been found, with error checking and encryption, it is possible to try many different orientations until one returns a valid result. Although the processing takes longer with this approach, it provides considerable simplification of the tag's geometry and flexibility in the tag's use. With high speed processes and fast memory, it has been found to be possible to process 200 frames per second with this approach. Not only does this allow very quick identification of the tag when, for example, an item is being swiped through a checkout, it also allows the use of an innovative focusing system. This will be described later in this application.

FIG. 3 depicts the means by which focusing and aiming of the reader may be achieved where it is desired the reader should not touch the tag. One of the design objectives of the tag is that it be as small as possible. This necessitates there be magnification and with magnification there is a problem both with focus and the steadiness of the person holding the reader. The solution to this lies in having a very high frame rate and having a focus mechanism that deliberately cycles between long and short vision and back again. In this manner, at least a few of the frames will produce an image sufficiently crisp enough for the image processing circuitry to decipher. Error checking and the encryption algorithm ensure that the reader processing system is assured it has obtained a proper view of the tag. In FIG. 3, the tag 310 is illuminated by two convergent beams of light 320 and 330 possibly produced by lasers. The beams may be of different colours, i.e., red and blue. When the beams form one dot or close to one dot, the reader 360 is a set distance from the tag. If necessary, to make the reader more flexible in terms of the distances tags can be read from, the angle of convergence of the beams can be adaptive by way of electrical or mechanical means, possibly linked to an auto-focusing mechanism. For example, if the lens 340 adjusts to a longer focal length, using an auto-focus mechanism, the angle of convergence becomes less. There can also be a zoom ability such that as the read distance is increased, the zoom magnification increases. The function of the beams is to ensure the reader is held at a distance to which the focus is approximately adjusted. The intent is that a read should occur in half a second or less to be acceptable to a human user. If the frame capture rate is, say, 100 frames per second, during the half second there will have been 100 frames captured. When the user presses the trigger on the reader the focus cycles on either side of what the auto-focus believes is the distance to the tag. The consequences of this is that some of the frames extracted during the, say half second of operation, will be sufficiently crisp enough when captured by the image sensor 350 to render a valid value by the processing circuitry. For example, if the reader is held at a distance of 150mm from the tag and the focus cycles between 100mm and 200mm in half a second then there will be 1mm difference in focal length for each of the frames. If the focus is such that between 140mm and 160mm yields a readable image when the reader is held at 150mm, it would mean that 20 frames would yield the same number. This brings us to the matter of steadiness of the user's hand and the user's aim at the tag. The process allows for 20 possibilities of the tag being in the view-finder in a state that it could be read.

The Reader Process Overview. The zone image is recovered and converted to a 128-bit number (the Tag Number) by the Reader electronics. The construction/configuration/operation of the Reader is as follows:

> Where it is intended the reader should make contact with the tag, the reader head is shaped so that it can be positioned reasonably consistently repeatable orientation over the tag.
> The reader includes macro optics and illumination to form an image on a 300k pixel, or greater, CMOS or CCD sensor installed in the reader.
➢ The pixel image is read out from the sensor into a digital electronic image processing system, where the 20x10 bit zone image is recovered in the manner described later in this application.
➢ A quality metric is also produced, which can be used to determine whether or not the tag has been degraded and whether this will interfere substantially with its successful decoding. A description of how the quality metric is created is described later in this application.
➢ The 128-bit tag number is recovered from the 20x10 bit zone image by a decoding and decryption process. The method used is described in greater detail later in this application.

The digital image processing typically consists of a cascade of three functions:

➢ orientation (note: - fiducial marks are not required),
➢ scaling, and
➢ extraction.

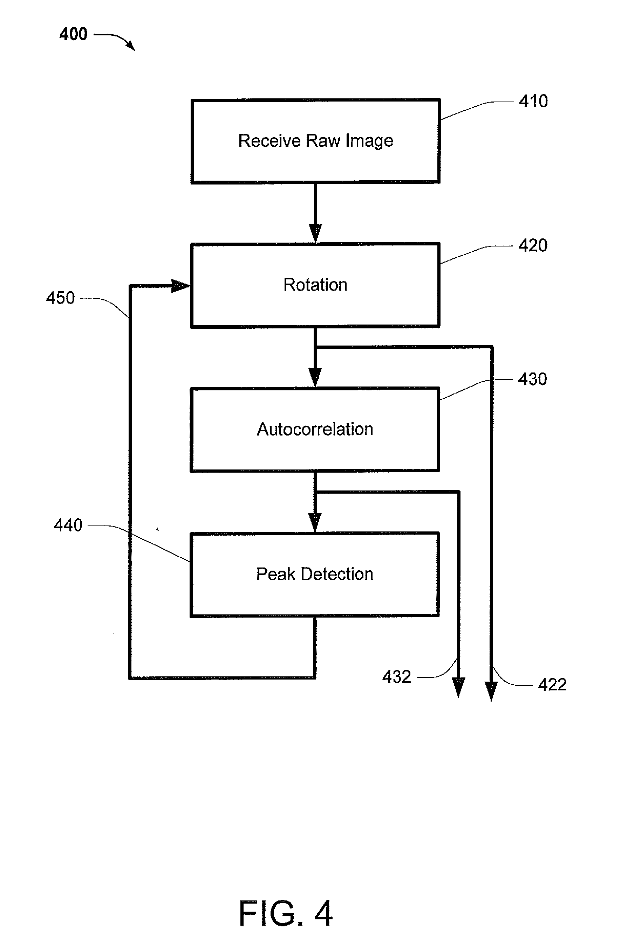

As shown in FIG. 4, orientation can be achieved using a method comprising:

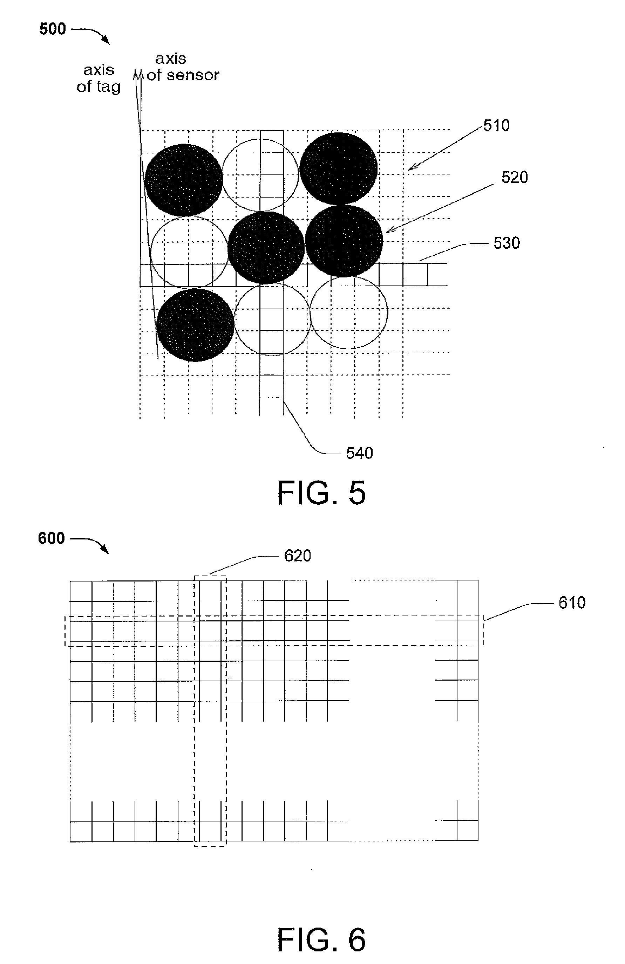

➢ STEP 410: Receiving a "raw image", by way of example a 640 x 480 pixel grey scale image with 8 bits per pixel. It will be appreciated that grey scale can be used rather than black and white or colour because it is smallest sufficiently small sized image possible whilst providing the information necessary for the image processing to work.
➢ STEP 420: Rotating the image by theta.
➢ STEP 430: Calculating the autocorrelation of the horizontal and vertical image vectors. Because the image consists of 3x3 repetitions of the tag zone image, the autocorrelation of a horizontal or vertical vector is maximized when the image axis corresponds to the sensor axis as shown in FIG. 5.
➢ STEP 440: Identifying the optimal solution utilizing a peak detection function. ➢ STEP 450: Iterating back to STEP 420, thereby the Peak Finder block selects the angle Theta such that the Horizontal- and Vertical Auto-Correlation function outputs are maximized.

The orientated image is passed on to the scale function.
In summary, the method 400 can comprises the steps of:

➢ STEP 410, receiving a raw image;
➢ STEP 420, rotating the image by theta, outputting a de-rotated image 422;
➢ STEP 430, calculating the horizontal auto correlation and the vertical autocorrelation, outputting *Qr* 432;
➢ STEP 440, calculating a peak finder; and
➢ STEP 450, iterating back to STEP 420.
At STEP 432, the Horizontal-Autocorrelation function and Vertical-Autocorrelation function are output, and is called Qr, and forms part of the quality function. At STEP 422, the de-rotated image is output and transmitted to the scale function.

At STEP 432, the Horizontal-Autocorrelation function and Vertical-Autocorrelation function are output, and is called Qr, and forms part of the quality function. At STEP 422, the de-rotated image is output and transmitted to the scale function.
FIG. 5 shows a relative orientation between the sensor array510 and the tag array 520. By way of example only a partial Horizontal vector 530 and a partial Vertical vector 540 are represented in the sensor image array.
The scale function typically operates on horizontal and vertical vectors as follows:

➢ For each horizontal vector *H*, the function finds a value *x* around 64 such that the following equation is maximized.

$$\sum_{i=1\cdots639} H(i) * H(i + x)$$

➢ Similarly, for each vertical vector *V,* the function finds a value *y* around 48 such that the following equation is maximized.

$$\sum_{j=1\cdots479} V(j) * V(j + y)$$

➢ FIG. 6 shows an example Horizontal vector 610 and Vertical vector 620 in a 640x480 orientated image. In this example, the Horizontal Vector *H(i)* comprises 640 elements (i.e. *i=0* to 639), and the Vertical Vector *V(j)* comprises 480 elements (i.e. *j*=0 to 479).
➢ The individual *x*'s and *y's* are averaged and the results passed to the extract function.
➢ The variance in the *x*'s and *y's* is Qs, the quality factor from the scale function

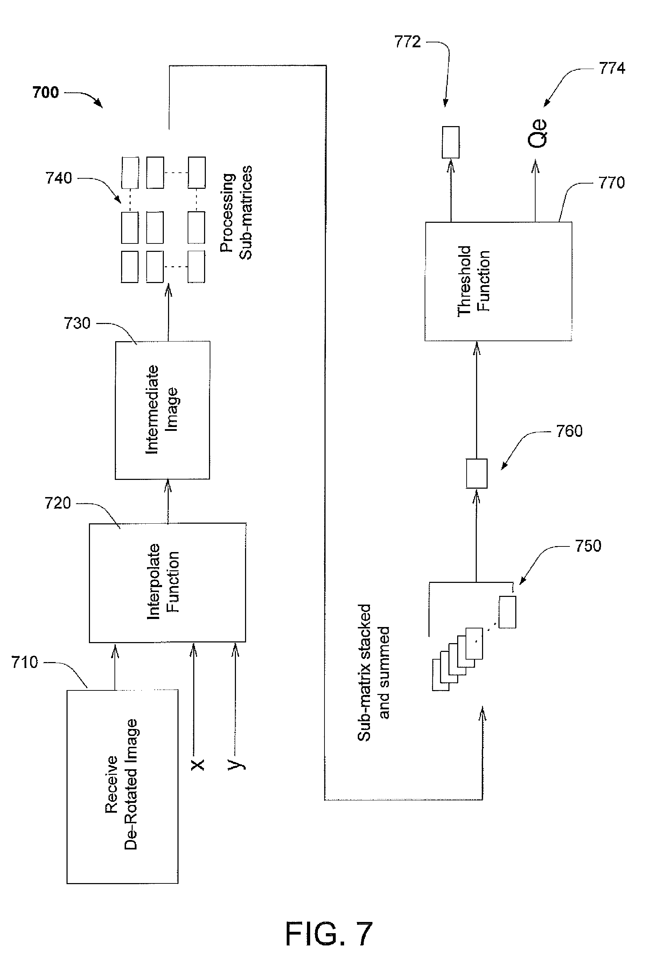

FIG. 7 depicts an example train of events that comprise an extraction process. The extraction function takes the orientated image from the orientation function and the *x* and *y* factors from the scale function. The method 700 comprises the steps of:

➢ STEP 710, receiving a de-rotate image, for example a 640x480 re-rotated 8 bit per pixel image;

➢ STEP 720, the horizontal and vertical pixel values are interpolated using *x* and *y* factors, for example by a 2d interpolate function.

➢ STEP 730, providing an intermediate image matrix, for example a 200x100 8 bit per pixel intermediate matrix;

➢ STEP 740, splitting the intermediate matrix into sub matrices, for example 10x10 sub-matrices of 20x10 images, or alternatively into 3x3 sub-matrices;

➢ STEP 750, summing the sub-matrices to provide a summed result 760, for example providing a 20x10 result having 15 bits per pixel;

➢ STEP 770, applying a threshold function to each cell of the summed result 760 , for example applying the 20x10 result to the threshold function can generate a 20x10 1-bit array.

➢ STEP 772 passing Qr, Qs and Qe, along with the 20x10 1-bit array to the Decoding Function.

➢ STEP 774, calculating Qe as the sum of the distance of each cell value from the threshold, being the quality of the extract function.

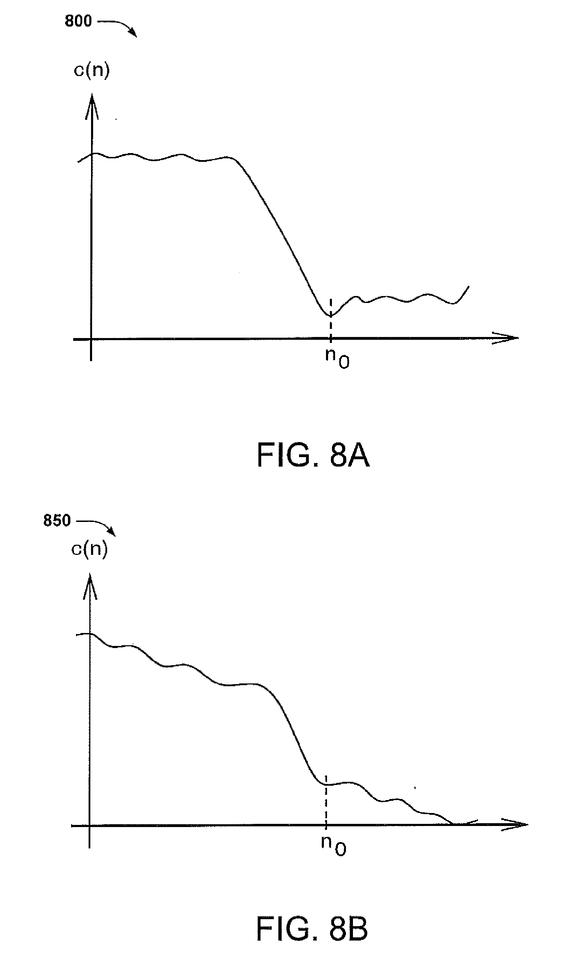

FIG. 8A provides an example of what are referred to as ideal reception curve 800, having a transition between relatively flat portions or the curve. FIG. 8B provides an example of what are referred to as a non-ideal reception curve 850, having a sloping curve where the contrast between the tag's pattern and the background is not as sharp. To achieve a better framing of the image a technique can be used to ensure there is a fine tuning of the size before the correlation and then find the local minimum after the midpoint of the downward slope. It will be appreciated that an embodiment can be implemented in software, for example written in C.

The Decoding and Decryption process consists of a cascade of the following functions:

➢ Decoding Function, and
➢ De-encryption Function.

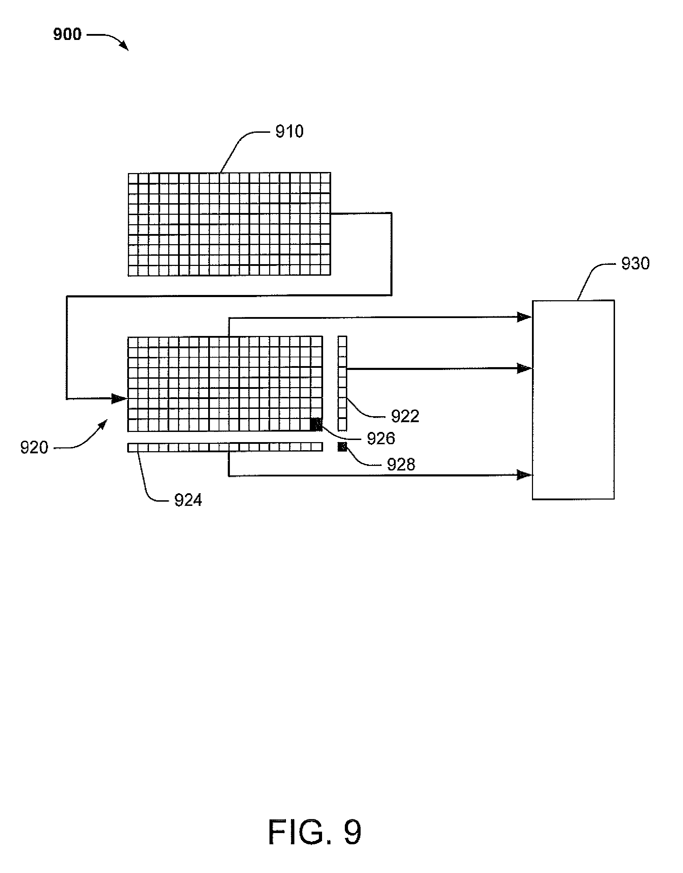

FIG. 9 depicts an example embodiment of the decoding process. In this embodiment the Decoding Function 900 works as follows:

➢ The Decoding Function receives an array from the digital signal processor functions at 910, for example as a 200 bit array;
➢ Providing extracted code 920 comprising parity for rows 922 and parity for columns 924;
➢ It will be appreciated that bit can be ignored, for example 926 and 928;
➢ Calculating a parity check on the extracted code at 930 provides that the code is accepted or rejected;

In an embodiment, the Decoding Function takes the Qr, Qs and Qe factors and combines them by multiplication. If the result is lower than some threshold, the decoder rejects the image as being too damaged to decode. If the overall quality factor is above the threshold, the decoder takes the 20x10 image and interprets it as a 19x9 1-bit array, surrounded by horizontal and vertical check bits. If any of the horizontal and vertical check bits are in-correct, the decoder rejects the image. If all check bits are OK, the first 170 bits of the 19x9 1-bit array are passed to the De-encryption Function.

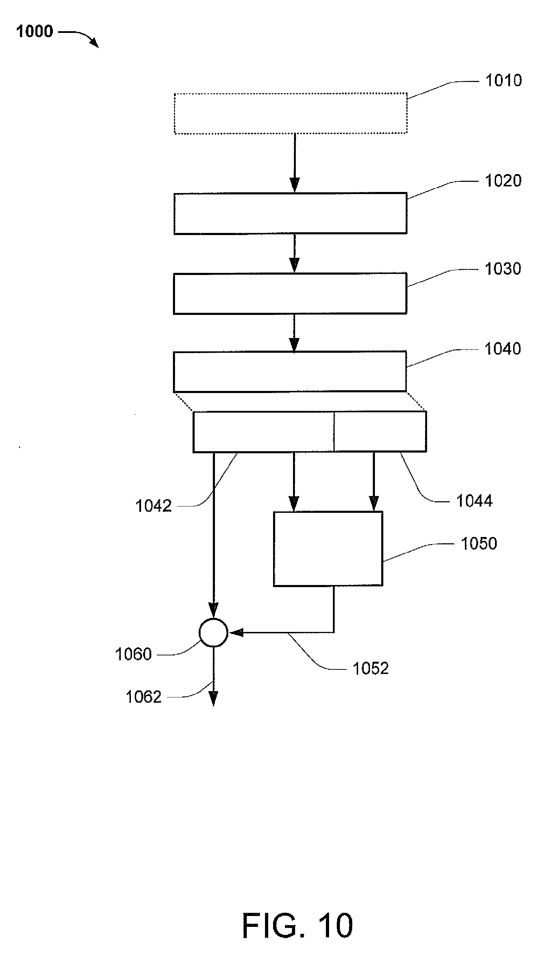

FIG. 10 depicts an example embodiment of the decryption process 1000 for a 170 bit extracted code. The extracted code is received from the decode function at 1010. In this embodiment the decryption function may be applied to other tag technologies, in that the firmware doing the decryption can be interposed between a reader utilising another form of barcode or RFID technology and still use numbers issued from the central registry. The method of the decryption process 1000 comprises the steps of::

➢ STEP 1020, receiving the 170 bit extracted code from the Decoding Function ;
➢ STEP 1030, decrypting the 170 bit extracted code with a decryption function $F'(x)$;
➢ STEP 1040,yield a 170 bit composite code;
➢ STEP 1040, calculating a composite code consisting of a 128 bit tag code 1042 concatenated with a 42 bit check code 1044.
➢ STEP 1050, calculate a check function - for example if the check code does not correspond to that of the 128 bit tag code, then the tag is deemed to be non-genuine, and the tag code is invalid, the result of the check function is indicated at 1052.
➢ STEP 1060 accepting or rejecting the tag code - for example if the check code is correct, then the 128 bit tag code is sent out 1062.

Using a 42-bit check code can provide low probability of error. As a result the probability of a randomly generated (damaged) tag code being found to be valid is $2^{-42}$, or 1 in 4 Trillion.

*Registration of Tag*

Marketing opportunity have been presented by the methods used to store information on this tag, make this tag, and provide reader systems of this nature.

A marketing concept is to:

• License this tag system at a cost effective price, such that any firm in the ID tag business would not see it as in their commercial interests to try to defeat this intellectual property;

• The licence to use this tag can require all users to utilise a global tag numbering register such that there is no chance of a licensee duplicating a number used by another licensee. All licensees will see it as being in their interests to cooperate with this system.

- Create a global e-commerce web-site where licensees can purchase sets of numbers for the tags they are making utilising this technology.

- Tag numbers will be sold very at a low cost, but the volume of tags expected to be sold on a global scale per annum will be such that the income from this system of tag registration will be considerable.

*Tag Manufacture*

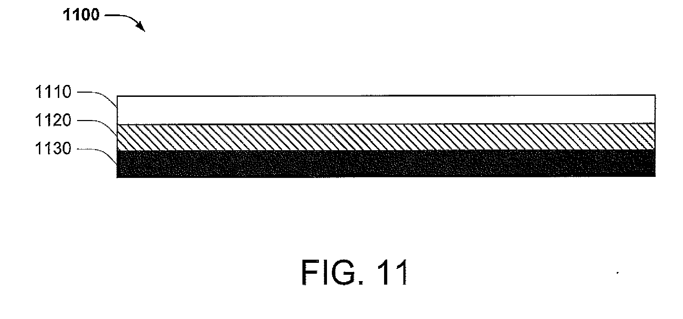

FIG. 11 provides a side cross-section of a tag. Tags may be printed using a variety of common methods such as laser printing or even screen printing where the size of the tag does not require a high level of precision. **[0050]** Where the tag is small, there is a need to print to high precision. In some instances, the tag will be attached to objects that may, at times be subject to scraping. This necessitates the tag be made from a durable material which is as thin as possible so as to not present too much of an edge. To further improve the chances of a tag surviving a scraping action, the edges of the tag may be purposely beveled inwards so that the object doing the scraping rides up the tag. Tags may be coated or clad with a very hard substance to give them better resistance to abrasion. Likewise, it is possible to use polyurethane of a similar abrasion resistant material to coat or clad the tags. In extreme, it is possible through the use of a plasma/laser reactor to coat the surface of a tag with clear crystalline diamond. One method of Tag manufacture will be as follows:

➢ Tags will be made on a durable stretch resistant clear film 1110 or sheet material such as polyester, polyester or polyimide with a surface that is receptive to the printing or etching method used.

➢ The tag will have a pattern of dots printed on it using a printer such as a high precision ink jet printer, photo-plotter or a laser or by some form of surface etching.

➢ The side of the sheet with the dots will then have applied to it a white polyurethane adhesive 1120 to which has been added pyrene, a chemical that luminesces under UV light.

➢ Once the adhesive is added, a layer of wax or highly siliconized paper 1130 will be applied to seal off the adhesive from the air and humidity.

➢ The sheet will then be cut into strips of tags using a method that bevels the edges of the strips as described above in order to give the tags some measure of scrape resistance.

➢ The strips are then RF welded to form one long continuous roll of tags.

➢ The roll is then put through a scribing process that cuts through the surface of the tag down to the wax or silicon paper. This too, presents a beveled edge.

In another approach, the clear material with patterns can be applied to a very thin sheet of glass. The glue is applied as described before with the wax or silicon paper. The glass is then scribed to make the tags, the scribing being such that the tag has beveled edges. The sheet is then placed on a rubber platen and rolled in such a manner as to break the glass long the scribe lines. The sheets of tags are provided to customers who pick a tag off, one at a time and apply them to the object to be identified. Generally it is expected tags will read and linked to the invoice or other voucher that describes the article being tagged.

**Claims**

1. A tag reading apparatus for reading a tag adapted to store a very large binary number, the tag comprising a pattern of dots to represent a code element, the apparatus comprising:

   an image capture element (360) for receiving a first image having a first tag (310) in view;
   a processor element adapted to apply one or more digital processing functions to the image; wherein
   the processor element is adapted to orientate (410, 420, 430, 440) and scale (600) the first image to thereby provide a first data element (710) for storing an orientated scaled image having a two dimensional representation;
   the processor element is adapted to calculate (720) a second data element (730) for storing an intermediate image of an isolated tag, and to extract therefrom a plurality of array segments (740)

   **characterised in that**

   the code element represented on the tag is created by applying an encryption algorithm to the large binary number;
   each one of the plurality of array segments extracted from the intermediate image is indicative of an identical arrangement of dots and is indicative of the stored binary number; and
   the processor element is adapted to calculate (750,770,772,774), from the plurality of array segments, a decoded code element and to decrypt (1000) the decoded code element to extract the stored binary number.

2. The apparatus according to claim 1, wherein the one or more digital processing functions include an error checking (930) and a decryption algorithm (1030) for confirming the correct reading and authenticity of the tag.

3. The apparatus according to any one of the preceding claims, wherein the tag comprises dots arranged in a series of identical arrays for improving tag detection and identification of tag orientation.

4. The apparatus according to claim 1 or claim 2, wherein the tag is illuminated by two convergent beams of light (320) and (330).

5. The apparatus according to any one of the preceding claims, wherein the image capture element (360) cycles between focusing long and short.

6. The apparatus according to any one of the preceding claims, wherein the tag comprises:

a plurality of dots defining a two-dimensional array, wherein the dots are arranged in a two-dimensional matrix of identical arrays, thereby enabling the apparatus to improve detection and identification of orientation.

7. The apparatus according to claim 6, wherein the dots are formed on a surface by printing with an ink jet printer or a laser or etching with an etching device.

8. The apparatus according to claim 6 or claim 7, wherein the tag further comprises abrasion resistant layer comprising any one or more of a clear polymer, glass or a thin layer of diamond for providing scratch resistance to the tag.

9. The apparatus according to any one of claims 6 to 8, wherein the tag comprises glue containing a material that strongly fluoresces under UV or other forms of electromagnetic radiation.

10. A method of reading a tag adapted to store a very large binary number, the tag comprising a pattern of dots to represent a code element created by applying an encryption algorithm to the large binary number, the method comprising the steps of:

receiving (410) a first image having a first tag in view;
orientating (420, 430, 440, 450) and scaling (600) the image to provide a first data element (710) storing an orientated scaled image having a two dimensional representation that is substantially aligned to the tag; and
calculating (720) a second data element (730) for storing an intermediate image of an isolated tag;
extracting, from the second data element, a plurality of array segments (740), each one of the plurality of array segments being indicative of an identical arrangement of dots and being indicative of the stored binary number;
calculating (750,770,772,774), from the plurality of array segments, a decoded code element indicative of the binary number, wherein the decoded code element is provided in the form of a first confirmed bit vector indicative of the stored binary number, and decoding of the decoded code element is confirmed by including calculation of a parity check; and
decrypting (1000) the decoded code element thereby calculating and
certifying the stored binary number, wherein decrypting the decoded code element includes calculating a check function to certify the stored binary number.

11. The method according to claim 10, wherein orientating and scaling the image comprises autocorrelation of a horizontal vector and autocorrelation of a vertical vector of an array calculated by rotating the first image.

12. The method according to claim 10 or claim 11, wherein orientating and scaling the image comprises iterating the step to find an optimal orientation and scale according to a cost function.

13. The method according to any one of claims 10 to 12, wherein the tag comprises:

a plurality of dots defining an two dimensional array; and
wherein the dots arranged in a series of identical arrays for improving detection and identification of orientation.

14. The method according to claim 13, wherein the dots are formed on a surface by printing with an ink jet printer or a laser or etching with an etching device.

15. The method according to claim 13 or claim 14, wherein the tag further comprises abrasion resistant layer comprising any one or more of a clear polymer, glass or a thin layer of diamond for providing scratch resistance to the tag.

16. The method according to any one of claims 13 to 15, wherein the tag comprises glue containing a material that strongly fluoresces under UV or other forms of electromagnetic radiation.

**Patentansprüche**

1. Vorrichtung zum Lesen eines Etiketts, das dazu ausgelegt ist, eine sehr große Binärzahl zu speichern, das Etikett umfassend ein Muster aus Punkten zur Darstellung eines Code-Elements, die Vorrichtung umfassend:

ein Bilderfassungselement (360) zum Empfangen eines ersten Bildes mit einem ersten Etikett (310) im Blick;

ein Prozessorelement, das dazu ausgelegt ist, ein oder mehrere digitale Verarbeitungsfunktionen auf das Bild anzuwenden; wobei

das Prozessorelement dazu ausgelegt ist, das erste Bild auszurichten (410, 420, 430, 440) und zu skalieren (600), um dadurch ein erstes Datenelement (710) zum Speichern eines ausgerichteten und skalierten Bildes bereitzustellen, das über eine zweidimensionale Darstellung verfügt;

das Prozessorelement dazu ausgelegt ist, ein zweites Datenelement (730) zum Speichern eines Zwischenbildes eines isolierten Etiketts zu berechnen und daraus eine Mehrzahl von Array-Segmenten (740) zu extrahieren,

**dadurch gekennzeichnet, dass**:

das auf dem Etikett dargestellte Code-Element durch Anwendung eines Verschlüsselungsalgorithmus auf die große Binärzahl erzeugt wird; jedes einzelne aus der Mehrzahl von Array-Segmenten, die aus dem Zwischenbild extrahiert wird, bezeichnend für eine identische Anordnung von Punkten und bezeichnend für die gespeicherte Binärzahl ist; und das Prozessorelement dazu ausgelegt ist, aus der Mehrzahl von Array-Segmenten ein decodiertes Code-Element zu berechnen (750, 770, 772, 774) und das decodierte Code-Element zu entschlüsseln (1000), um die gespeicherte Binärzahl zu extrahieren.

2. Vorrichtung gemäß Anspruch 1, wobei die eine bzw. die mehreren digitalen Verarbeitungsfunktionen eine Fehlerprüfung (930) und einen Verschlüsselungsalgorithmus (1030) zur Bestätigung des korrekten Lesens und der Authentizität des Etiketts einschließen.

3. Vorrichtung gemäß einem der vorherigen Ansprüche, wobei das Etikett Punkte umfasst, die in einer Reihe identischer Arrays angeordnet sind, um die Etiketterkennung und die Identifizierung der Etikettausrichtung zu verbessern.

4. Vorrichtung gemäß Anspruch 1 oder Anspruch 2, wobei das Etikett von zwei konvergenten Lichtstrahlen (320) und (330) beleuchtet wird.

5. Vorrichtung gemäß einem der vorherigen Ansprüche, wobei das Bilderfassungselement (360) einen Fokussierungszyklus zwischen lang und kurz durchläuft.

6. Vorrichtung gemäß einem der vorherigen Ansprüche, wobei das Etikett umfasst:

eine Mehrzahl von Punkten, die ein zweidimensionales Array definieren, wobei die Punkte in einer zweidimensionalen Matrix aus identischen Arrays angeordnet sind, wodurch die Vorrichtung in die Lage versetzt wird, die Erkennung und Identifizierung der Ausrichtung zu verbessern.

7. Vorrichtung gemäß Anspruch 6, wobei die Punkte auf einer Oberfläche gebildet werden, indem sie mit einem Tintenstrahldrucker oder Laser gedruckt oder mit einer Ätzeinrichtung geätzt werden.

8. Vorrichtung gemäß Anspruch 6 oder Anspruch 7, wobei das Etikett des Weiteren eine abriebbeständige Schicht umfasst, die aus einem oder mehreren von durchsichtigem Polymer, Glas oder einer dünnen Schicht aus Diamant besteht, um dem Etikett Kratzfestigkeit zu verleihen.

9. Vorrichtung gemäß einem der Ansprüche 6 bis 8, wobei das Etikett einen Klebstoff umfasst, der ein Material enthält, das unter der Einwirkung von UV oder anderen Formen elektromagnetischer Strahlung stark fluoresziert.

10. Verfahren zum Lesen eines Etiketts, das dazu ausgelegt ist, eine sehr große Binärzahl zu speichern, das Etikett umfassend ein Muster aus Punkten zur Darstellung eines Code-Elements, das durch Anwendung eines Verschlüsselungsalgorithmus auf die große Binärzahl erzeugt wird, das Verfahren umfassend die folgenden Schritte:

das Empfangen (410) eines ersten Bildes mit einem Etikett im Blick; das Ausrichten (420, 430, 440, 450) und Skalieren (600) des Bildes, um ein erstes Datenelement (710) zum Speichern eines ausgerichteten und skalierten Bildes bereitzustellen, das über eine zweidimensionale Darstellung verfügt, die im Wesentlichen an dem Etikett ausgerichtet ist; und das Berechnen (720) eines zweiten Datenelements (730) zum Speichern eines Zwischenbildes eines isolierten Etiketts; das Extrahieren einer Mehrzahl von Array-Segmenten (740) aus dem zweiten Datenelement, wobei jedes einzelne aus der Mehrzahl von Array-Segmenten bezeichnend für eine identische Anordnung von Punkten und bezeichnend für die gespeicherte Binärzahl ist; das Berechnen (750, 770, 772, 774) eines decodierten Code-Elements, das bezeichnend für die Binärzahl ist, wobei das decodierte Code-Element in der Form eines ersten bestätigten Bitvektors bereitgestellt wird, der bezeichnend ist für die gespeicherte Binärzahl, und das Decodieren des decodierten Code-Elements durch Einbeziehung der Berechnung einer Paritätsprüfung bestätigt wird; und

das Entschlüsseln (1000) des decodierten Code-Elements, wodurch die gespeicherte Binärzahl berechnet und zertifiziert wird, wobei das Entschlüsseln des decodierten Code-Elements die Berechnung einer Prüffunktion einschließt, um die gespeicherte Binärzahl zu zertifizieren.

11. Verfahren gemäß Anspruch 10, wobei das Ausrichten und Skalieren des Bildes die Autokorrelation eines horizontalen Vektors und die Autokorrelation eines vertikalen Vektors eines Arrays umfasst, das durch Drehung des ersten Bildes berechnet wird.

12. Verfahren gemäß Anspruch 10 oder Anspruch 11, wobei das Ausrichten und Skalieren des Bildes das Iterieren des Schrittes umfasst, um eine optimale Ausrichtung und Skalierung entsprechend einer Kostenfunktion zu finden.

13. Verfahren gemäß einem der Ansprüche 10 bis 12, wobei das Etikett umfasst:

eine Mehrzahl von Punkten, die eine zweidimensionales Array definieren, und wobei die Punkte in einer Reihe identischer Arrays angeordnet sind, um die Erkennung und die Identifizierung der Ausrichtung zu verbessern.

14. Verfahren gemäß Anspruch 13, wobei die Punkte auf einer Oberfläche gebildet werden, indem sie mit einem Tintenstrahldrucker oder Laser gedruckt oder mit einer Ätzeinrichtung geätzt werden.

15. Verfahren gemäß Anspruch 13 oder Anspruch 14, wobei das Etikett des Weiteren eine abriebbeständige Schicht umfasst, die aus einem oder mehreren von durchsichtigem Polymer, Glas oder einer dünnen Schicht aus Diamant besteht, um dem Etikett Kratzfestigkeit zu verleihen.

16. Verfahren gemäß einem der Ansprüche 13 bis 15, wobei das Etikett einen Klebstoff umfasst, der ein Material enthält, das unter der Einwirkung von UV oder anderen Formen elektromagnetischer Strahlung stark fluoresziert.

## Revendications

1. Un appareil de lecture d'étiquette pour lire une étiquette conçue pour stocker un très grand nombre binaire, l'étiquette comprenant un motif de points pour représenter un élément de code, l'appareil comprenant :

un élément de capture d'image (360) pour recevoir une première image ayant une première étiquette (310) en vue ;
un élément de processeur conçu pour appliquer une ou plusieurs fonction(s) de traitement numérique à l'image ; dans lequel
l'élément de processeur est conçu pour orienter (410, 420, 430, 440) et mettre à l'échelle (600) la première image pour fournir ainsi un premier élément de données (710) afin de stocker une image orientée mise à l'échelle ayant une représentation bidimensionnelle ;
l'élément de processeur est conçu pour calculer (720) un deuxième élément de données (730) afin de stocker une image intermédiaire d'une étiquette isolée, et pour extraire de celle-ci une pluralité de segments de tableau (740)

**caractérisé en ce que**

l'élément de code représenté sur l'étiquette est créé en appliquant un algorithme de chiffrement au grand nombre binaire ;
chaque segment de tableau parmi la pluralité de segments de tableau extraits de l'image intermédiaire est indicatif d'un agencement identique de points et est indicatif du nombre binaire stocké ; et
l'élément de processeur est conçu pour calculer (750, 770, 772, 774), à partir de la pluralité de segments de tableau, un élément de code décodé et pour déchiffrer (1000) l'élément de code décodé pour extraire le nombre binaire stocké.

2. L'appareil selon la revendication 1, dans lequel la ou les fonction(s) de traitement numérique inclu(en)t un contrôle d'erreur (930) et un algorithme de déchiffrement (1030) pour confirmer la lecture correcte et l'authenticité de l'étiquette.

3. L'appareil selon l'une quelconque des revendications précédentes, dans lequel l'étiquette comprend des points agencés dans une série de tableaux identiques pour améliorer la détection d'étiquette et l'identification de l'orientation d'étiquette.

4. L'appareil selon la revendication 1 ou la revendication 2, dans lequel l'étiquette est illuminée par deux faisceaux de lumière convergents (320) et (330).

5. L'appareil selon l'une quelconque des revendications précédentes, dans lequel l'élément de capture d'image (360) itère entre mises au point longues et courtes.

**6.** L'appareil selon l'une quelconque des revendications précédentes, dans lequel l'étiquette comprend :

une pluralité de points définissant un tableau bidimensionnel, dans lequel les points sont agencés en une matrice bidimensionnelle de tableaux identiques, permettant ainsi à l'appareil d'améliorer la détection et l'identification de l'orientation.

**7.** L'appareil selon la revendication 6, dans lequel les points sont formés sur une surface en imprimant avec une imprimante à jet d'encre ou un laser ou en gravant avec un dispositif de gravure.

**8.** L'appareil selon la revendication 6 ou la revendication 7, dans lequel l'étiquette comprend en outre une couche résistante à l'abrasion comprenant un ou plusieurs élément(s) parmi un polymère transparent, du verre ou une fine couche de diamant pour fournir une résistance à la rayure à l'étiquette.

**9.** L'appareil selon l'une quelconque des revendications 6 à 8, dans lequel l'étiquette comprend de la colle contenant un matériau fortement fluorescent sous des ultraviolets ou autres formes de rayonnement électromagnétique.

**10.** Un procédé de lecture d'une étiquette conçue pour stocker un très grand nombre binaire, l'étiquette comprenant un motif de points pour représenter un élément de code créé en appliquant un algorithme de chiffrement au grand nombre binaire, le procédé comprenant les étapes de :

recevoir (410) une première image ayant une première étiquette en vue ;
orienter (420, 430, 440, 450) et mettre à l'échelle (600) l'image pour fournir un premier élément de données (710) stockant une image orientée et mise à l'échelle ayant une représentation bidimensionnelle qui est substantiellement alignée sur l'étiquette ; et
calculer (720) un deuxième élément de données (730) pour stocker une image intermédiaire d'une étiquette isolée ;
extraire, du deuxième élément de données, une pluralité de segments de tableau (740), chaque segment de tableau parmi la pluralité de segments de tableau étant indicatif d'un agencement identique de points et étant indicatif du nombre binaire stocké ;
calculer (750, 770, 772, 774), à partir de la pluralité de segments de tableau, un élément de code décodé indicatif du nombre binaire, dans lequel l'élément de code décodé est fourni sous la forme d'un premier vecteur de bits confirmé indicatif du nombre binaire stocké, et le décodage de l'élément de code décodé est confirmé par l'inclusion d'un calcul de contrôle de parité ; et

déchiffrer (1000) l'élément de code décodé en calculant et certifiant ainsi le nombre binaire stocké, où le déchiffrement de l'élément de code décodé inclut calculer une fonction de contrôle pour certifier le nombre binaire stocké.

**11.** Le procédé selon la revendication 10, dans lequel l'orientation et la mise à l'échelle de l'image comprennent l'autocorrélation d'un vecteur horizontal et l'autocorrélation d'un vecteur vertical d'un tableau calculées en faisant tourner la première image.

**12.** Le procédé selon la revendication 10 ou la revendication 11, dans lequel l'orientation et la mise à l'échelle de l'image comprennent la réitération de l'étape pour trouver une orientation et une échelle optimales selon une fonction de coût.

**13.** Le procédé selon l'une quelconque des revendications 10 à 12, dans lequel l'étiquette comprend :

une pluralité de points définissant un tableau bidimensionnel ; et
dans lequel les points sont agencés dans une série de tableaux identiques pour améliorer la détection et l'identification de l'orientation.

**14.** Le procédé selon la revendication 13, dans lequel les points sont formés sur une surface en imprimant avec une imprimante à jet d'encre ou un laser ou en gravant avec un dispositif de gravure.

**15.** Le procédé selon la revendication 13 ou la revendication 14, dans lequel l'étiquette comprend en outre une couche résistante à l'abrasion comprenant un ou plusieurs élément(s) parmi un polymère transparent, du verre ou une fine couche de diamant pour fournir une résistance à la rayure à l'étiquette.

**16.** Le procédé selon l'une quelconque des revendications 13 à 15, dans lequel l'étiquette comprend de la colle contenant un matériau fortement fluorescent sous des ultraviolets ou autres formes de rayonnement électromagnétique.

FIG. 1A

FIG. 1B

FIG. 1C

140 ⟶

# FIG. 1D

150 ⟶

# FIG. 1E

200

240

250

230

220

210

270

FIG. 2

300

360

350

310

320

340

330

FIG. 3

400

Receive Raw Image — 410

Rotation — 420

450

Autocorrelation — 430

Peak Detection

440

432

422

FIG. 4

500 ⟍

axis
of tag

axis
of sensor

510

520

530

540

# FIG. 5

600 ⟍

620

610

# FIG. 6

FIG. 7

800 ⟶

c(n)

$n_0$

# FIG. 8A

850 ⟶

c(n)

$n_0$

# FIG. 8B

900 —

910

930

922

926

928

920

924

# FIG. 9

1000

1010

1020

1030

1040

1042

1044

1050

1060

1052

1062

FIG. 10

1100

1110
1120
1130

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1179805 A